(19) **Europäisches Patentamt**

**European Patent Office**

**Office européen des brevets**

(11) **EP 1 026 609 A2**

(12) **EUROPEAN PATENT APPLICATION**

(43) Date of publication:
09.08.2000 Bulletin 2000/32

(51) Int. Cl.⁷: **G06F 17/60**

(21) Application number: **00300681.4**

(22) Date of filing: **28.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.02.1999 JP 2923799**

(71) Applicant: **FUJITSU LIMITED**
**Kawasaki-shi, Kanagawa 211-8588 (JP)**

(72) Inventor:
**Kaneko, Sanae**
**c/o Fujitsu Ltd.**
**Kawasaki-shi, Kanagawa 211-8588 (JP)**

(74) Representative:
**Stebbing, Timothy Charles et al**
**Haseltine Lake & Co.,**
**Imperial House,**
**15-19 Kingsway**
**London WC2B 6UD (GB)**

(54) **Method of and apparatus for displaying a schedule on a computer display**

(57) In a schedule display apparatus, a display interval defining part defines a first display interval during a first time span and a second display interval during a second time span such that the first time span and the second time span are mutually exclusive. A display control part generates whole display information including first display information in accordance with the first display interval during the first time span and second display information in accordance with the second display interval during the second time span.

F I G. 2

EP 1 026 609 A2

**Description**

BACKGROUND OF THE INVENTION

1. Field of the Invention

The present invention generally relates to schedule display apparatus, methods for displaying a schedule and recording media recorded with a program for causing a computer to display a schedule that are used for personal computers, electronic notebooks or the like, and more particularly to a schedule display apparatus, a method for displaying a schedule and a recording medium recorded with a program for causing a computer to display a schedule in which the time scale of a schedule can be selectively changed so that the scale of an active time can be different from that of a non-active time.

Recently, in the computer industry, with technology miniaturizing computers, schedules, telephone books, and household account books tend to be software products installed in not only personal computers (hereafter called PC) but also electronic notebooks or the like.

Especially, software products to manage a schedule are generally pre-installed into PCs and have spread into other PCs and electronic notebooks to expand those businesses. Accordingly, more user-friendly displays are required.

The display of the schedule is required to improve. For example, for users having a similar schedule each day, it is preferable that their active hours, such as regular working hours, be displayed so as to be more user-friendly than their non-active hours.

2. Description of the Related Art

A conventional schedule display for PCs is described as follows:

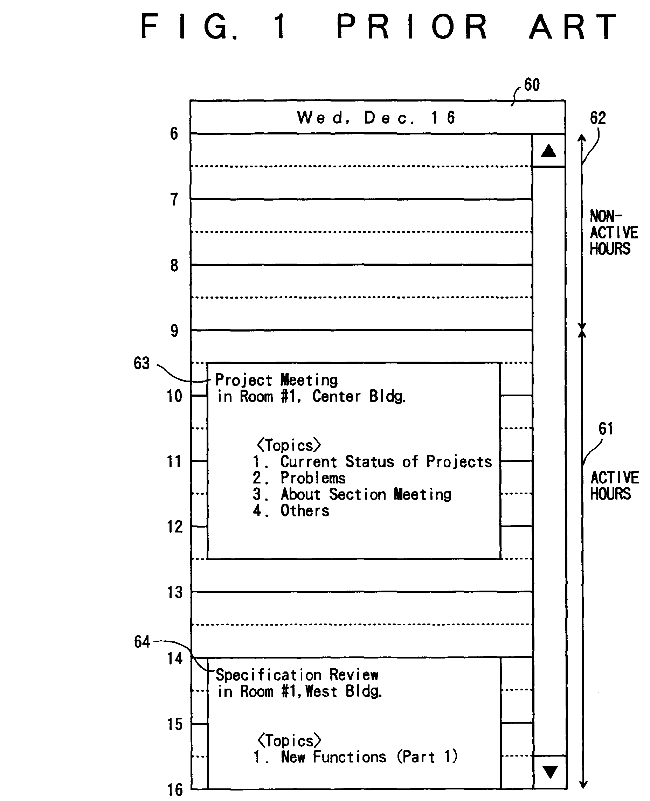

FIG.1 shows an example of a conventional schedule display.

A computer system or a user defines arbitrarily a scale of time. As shown in FIG.1, a conventional schedule display 60 shows a daily schedule inputted by a user, which schedule goes from 0:00 to 24:00 hours with a 30 min. per division scale. Even if there is no activity scheduled during the non-active hours of 6:00 to 9:00 hours, the non-active hours 62 are displayed with the 30 min. per division scale, which scale is the same as that of the active hours 61.

However, the above-mentioned conventional schedule display 60 has the following disadvantages.

In this conventional schedule display, when an interval between time scale divisions is enlarged to show all information inputted by a user for one scheduled activity, the intervals between all time scale divisions of a day, 0:00 to 24:00 hours, are enlarged. Although the display 60 can show a large quantity of information for each scheduled activity, a display area is actually limited.

For example, as shown in FIG.1, even when there is no scheduled activity during the non-active hours 62, the display 60 shows enlarged intervals for the non-active hours 62. Also, activities 63 and 64 are scheduled and displayed during the active hours 61 in FIG.1. In this case, the display 60 does not show all the information for the activity 64 that is scheduled from 14:00 to 17:00 hours, but only information until 16:00 hours because of the limitation of the display area. Accordingly, it becomes inconvenient to see the whole schedule of a day.

SUMMARY OF THE INVENTION

It is a general object of the present invention to provide a schedule display, a method for displaying the same and a recording medium of the same in which the above-mentioned problems are eliminated.

A more specific object of the present invention is to provide a schedule display, a method for displaying the same and a recording medium of the same which have a schedule management function and can set a time scale for each of defined time ranges so that the frequently accessed time range has a large time scale to see information within the limited display area.

The above objects of the present invention are achieved by a schedule display apparatus including a display interval defining part for defining a first display interval during a first tune span and a second display interval during a second time span, the first time span and the second time span being mutually exclusive; and a display control part for generating whole display information including first display information in accordance with the first display interval during the first time span and second display information in accordance with the second display interval during the second time span.

According to the above invention, it is possible to define or distinguish at least two kinds of time spans, the first time span and the second time span; for example, the active hours and the non-active hours. Moreover, this makes it possible for a user to selectively define hours corresponding to the user's lifestyle. In addition, positions for schedule time in the display for the active hours and the non-active hours are defined based on the first display interval and the second display interval. For example, a respective number of lines may be applied to the first display interval and the second display interval. Therefore, a time span requiring a relatively large quantity of information can be shown in more detail than the other time span by defining a display interval.

The above objects of the present invention are achieved by a method for displaying a schedule including the steps of: the steps of: (a) defining a first display interval during a first time span and a second display interval during a second time span, the first time span and the second time span being mutually exclusive; and (b) generating whole display information including first display information in accordance with the first display interval during the first time span and second display information in accordance with the second display interval during the second time span.

According to the above invention, a method for displaying a schedule can provide a method in which schedule a time span requiring a relatively large quantity of information can be shown in more detail than another time span with schedule time.

The above objects of the present invention are achieved by a computer-readable recording medium recorded with a program for causing a computer to display a schedule, the program including the codes of: (a) defining a first display interval during a first time span and a second display interval during a second time span, the first time span and the second time span being mutually exclusive; and (b) generating whole display information including first display information in accordance with the first display interval during the first time span and second display information in accordance with the second display interval during the second time span.

According to the above invention, a computer-readable recording medium recorded with a program for causing to display a schedule can provide a program in which schedule a time span requiring a relatively large quantity of information can be shown in more detail than another time span with schedule time.

## BRIEF DESCRIPTION OF THE DRAWINGS

Other objects, features and advantages of the present invention will become more apparent from the following detailed description when read in conjunction with the accompanying drawings, in which:

FIG.1 shows an example of a conventional schedule display;
FIG.2 shows a block diagram of a system according to an embodiment of the present invention;
FIG.3 shows a diagram of a hardware configuration according to the embodiment of the present invention;
FIG.4 shows a diagram of a table structure according to the embodiment of the present invention;
FIG.5 shows a flowchart diagram of the scale positioning according to the embodiment of the present invention;
FIG.6 shows a diagram of a schedule setting window according to the embodiment of the present invention; and
FIG.7 shows a schedule display window according to the embodiment of the present invention.

## DESCRIPTION OF THE PREFERRED EMBODIMENT

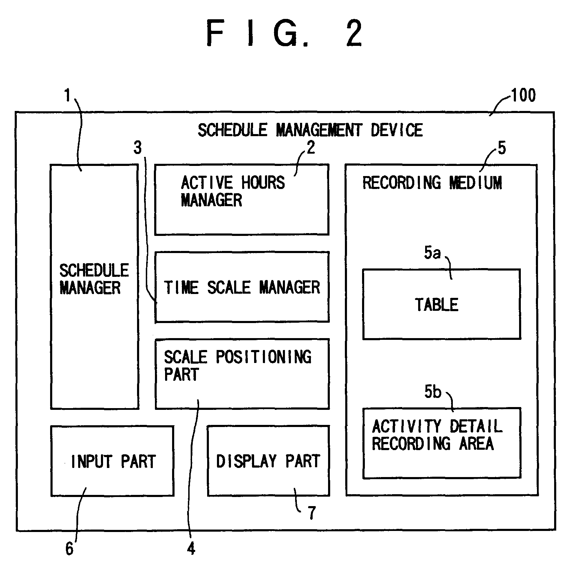

FIG.2 shows a block diagram of a system according to an embodiment of the present invention.

As shown in FIG.2, a schedule management device 100 includes a schedule manager 1 that controls the schedule management device 100 to edit and to display schedules, an active hours manager 2 that manages a user's active hours, a time scale manager 3 that manages the time scale of the active hours and that of non-active hours, a scale positioning part 4 that positions time in accordance with the scale, a recording medium 5 that records required information to control display functions including the time scale positioning, an input part 6 that controls data inputted by a user, and a display part 7 that controls the display information.

As mentioned above, the schedule manager 1 controls the schedule management device 100 to edit and display schedules.

The recording medium 5 has a table 5a and an activity details recording area 5b.

The active hours manager 2 allows a user to set a beginning time and an ending time of the user's active hours when the user creates a new schedule or edits the created schedule. In addition, the active hours manager 2 saves the information about the user's active hours into the table 5a in the recording medium 5. Moreover, the active hours manager 2 displays the beginning time and ending time of standard active hours when a new schedule is opened and displays those times defined by the user at the last time when the schedule is opened to edit it. In this manner, it is possible to define and distinguish the active hours and the non-active hours. Moreover, this makes it possible for a user to selectively define hours corresponding to the user's lifestyle.

The time scale manager 3 allows a user to set time scales for the active hours and for the non-active hours and record the time scales defined by the user into the table 5a in the recording medium 5. In addition, the time scale manager 3 displays the schedule in a standard time scale when a new schedule is opened and displays the schedule in accordance with the time scale defined by the user when the schedule is opened to edit it. When the time scale is changed, the changed time scale is saved into the table 5a in the recording medium 5.

The scale positioning part 4 calculates the time positions to display times, 0:00 to 24:00 hours, for the schedule in accordance with the time scales of the active hours and the non-active hours defined by the user. Thus, each time scale can be converted into display interval per time scale among the active hours or the non-active hours and the positions of time on the display can be calculated automatically in accordance with the converted intervals so that the user can simply set the time scale in min. or hours per division.

The input part 6 allows a user to input data needed to manage a schedule and controls the data.

The display part 7 shows information for a user to manage a schedule and displays a user's schedule.

The table 5a which is used to define positions indicating times according to the present invention will be explained later.

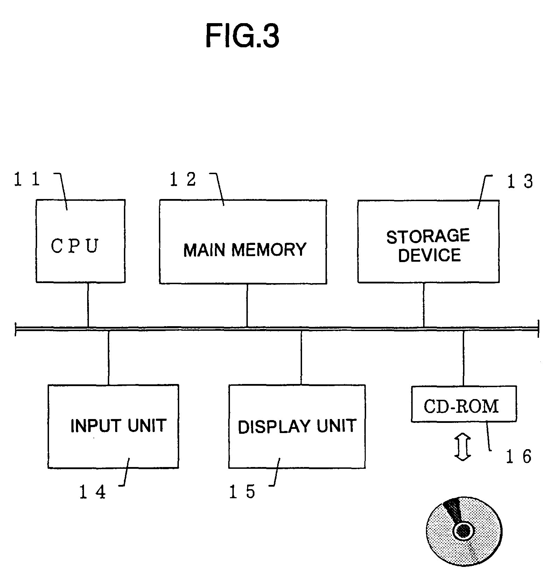

FIG.3 shows a diagram of a hardware configuration according to the embodiment of the present invention.

As shown in FIG.3, the schedule management device 100 is equipped with a CPU 11 that executes an installed program (explained later), a main memory 12 that stores instructions to execute the program and data temporarily, a storage device 13 into which the program is loaded and the needed table is stored, an input unit 14 that controls data inputted by a user, a display unit 15 that controls the display information, and a CD-ROM 16 where the program is stored. Of course, the medium storing the program according to the present invention is not limited to the CD-ROM, but other computer readable recording media may be used.

The table 5a used in the schedule management device 100 will now be described.

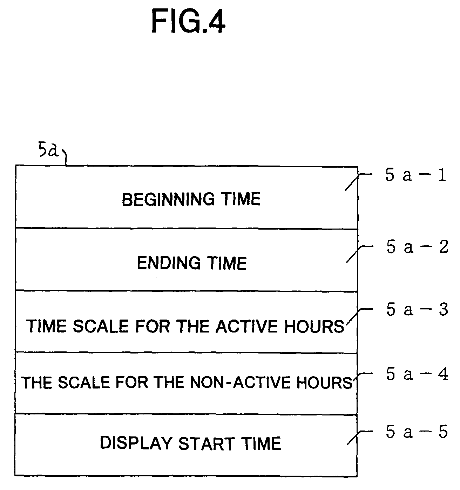

FIG.4 shows a diagram of a table structure according to the embodiment of the present invention.

As shown in FIG.4, the table 5a includes a beginning time 5a-1, an ending time 5a-2, a time scale 5a-3 for the active hours, a time scale 5a-4 for the non-active hours, and a display start time 5a-5. The beginning time 5a-1 and the ending time 5a-2 are managed by the active hours manager 2. The time scales 5a-3 and 5a-4 are managed by the time scale manager 3. The display start time 5a-5 indicates the first time to display.

A scale positioning will now be explained as follows:

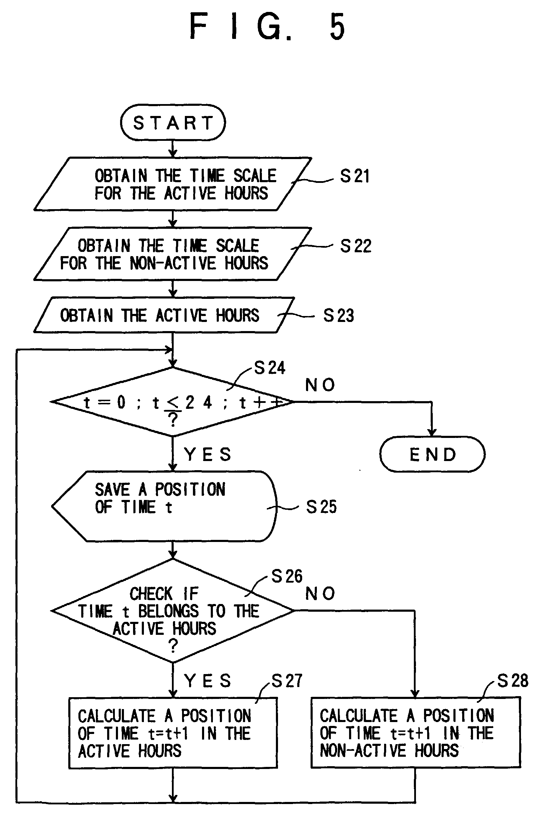

FIG.5 shows a flowchart diagram of the scale positioning according to the embodiment of the present invention.

As shown in FIG.5, to define time positions in the display, the scale positioning part 4 in FIG.2 includes a step S21 that obtains the time scale for the active hours, a step S22 that obtains the time scale for the non-active hours, a step S23 that obtains the active hours, a step S24 that checks whether a time t equals 24, a step S25 that saves a position into an array for the time t, a step S26 that checks whether the time t belongs to the active hours, a step S27 that calculates a position in the display for a time t+1 in the active hours, and a step S28 that calculates a position in the display for a time t+1 in the non-active hours.

After the time t is initialized (t=0) , a value of the time scale 5a-3 for the active hours is retrieved from the table 5a and is converted into a length for the display among the active hours in the step S21. Then, a value of the time scale 5a-4 for the non-active hours is retrieved from the table 51 and is converted into a display interval among the non-active hours in the step S22. It should be noted that the values for the time scales 5a-3 and 5a-4 are shown in minutes and the value for the active hours is usually fewer minutes than that for the non-active hours. However, after those values are converted into the display intervals, the display interval for the active hours is longer than that for the non-active hours. In this manner, activities during the active hours can be displayed in more detail than those during the non-active hours.

Furthermore, the beginning time 5a-1 and the ending time 5a-2 for the active hours are retrieved from the table 5a in the step S23.

In the step S24, the time t is checked. When the time t is greater than 24, this process for the scale positioning is terminated. When the time t is less than or equal to 24, the process goes to the step S25.

A position of a time t, calculated in the steps 27 and 28, is saved into an array n (n is one of natural numbers 0 to 24 and corresponds to the time t) in the step S25.

Subsequently, the time t is checked as to whether it belongs to the active hours between the beginning time 5a-1 and the ending time 5a-2 in the step S26. When time t belongs to the active hours, the process goes to the step S27. When the time t belongs to the non-active hours, the process goes to the step S28.

When the time t belongs to the active hours, the display interval length for the active hours, which length is calculated in the step S23, is added to the position of the time t. Thus, a position of the time t=t+1 is calculated in the step S27.

When the time t belongs to the non-active hours, the display interval length for the non-active hours, which length is calculated in the step S22, is added to the position of the time t. Thus, a position of the time t=t+1 is calculated in the step S28.

After the step S27 or S28, the process returns to the step S24.

In the above-mentioned process, when the time scale is converted into the display interval, one line in the display may apply to the display interval. That is, 30 min., 15 min., 10 min., or 5 min. scale may be converted into the display interval of 2 lines, 4 lines, 6 lines, or 12 lines, respectively.

Therefore, the time scale indicated by the user is converted into the display interval so that the user can simply set the time scale in minutes per division.

It is assumed that hours from 9 AM to 6 PM (18:00 hours) are defined as the active hours and the time scale for the active hours is defined as 30 min. per division (the display interval of 2 lines) In addition, it is assumed that hours other than the active hours are defined as the non-active hours and the time scale for the active hours is defined as 60 min. per division (the display interval of one line) When arrays a[t] are used to save a number of lines, a value of a[0] is 0 (zero) when t is 0 (0 AM), a value of a[t] increases by one over the previous value (a[t-1]) when t increases from 1 to 9 or from 18 (6 PM) to 24 (12 AM), and the value of a[t] increases by two over the previous value (a[t-1]) when t increases from 9 to 18.

Therefore, all time positions in the display for the active hours and the non-active hours are defined automatically so that the user can simply set the time scales in minutes per division.

A dialog box to set the active hours and the time scales is now explained as follows:

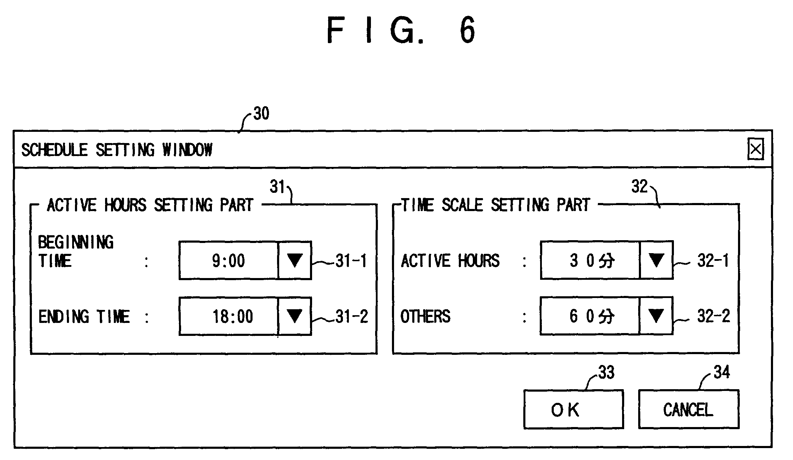

FIG.6 shows a diagram of a schedule setting window according to the embodiment of the present invention.

As shown in FIG.6, the schedule setting window 30 includes an active hours setting part 31 for a user to set the beginning time and the ending time of the active hours, a time scale setting part 32 for the user to set the time scales of the active hours and of the non-active hours, an OK button 33 to validate the information inputted by the user, and a cancel button 34 to invalidate the information inputted by the user.

The active hours setting part 31 includes a dropdown list 31-1 to set the beginning time and a dropdown list 31-2 to set the ending time. When a downward arrow for a dropdown list 31-1 or 31-2 is clicked by a user, a dropdown list 31-1 or 31-2 shows a list of predetermined hours. Thus, one of hours for the dropdown list 31-1 or 31-2 is selected by the user.

The time scale setting part 32 includes a dropdown list 32-1 to set the time scale for the active hours and a dropdown list 32-2 to set the time scale for the non-active hours. When a downward arrow for a dropdown list 32-1 or 32-2 is clicked by a user, the dropdown list 32-1 or 32-2 shows a list of minutes per division. Thus, one of minutes intervals for the dropdown list 32-1 or 32-2 is selected by the user. Some selective examples are provided for the lists, such as a list of 5 min., 10 min., 15 min., 30 min., and 60 min., per division. The provided lists make it possible for a user to input data with a consistent data pattern.

The dropdown list 32-2 used to set the time scale for the non-active hours may be programmed so that a value (min.) per division for the non-active hours is selected automatically to be two or three times as much as the value per division selected by the user as the time scale for the active hours. That is, in the display, the interval for the non-active hours may be calculated by the scale positioning part 4 in FIG.2 to be half or one third of the display interval for the active hours. Alternately, the ratio of the time scale for the active hours to the time scale for the non-active hours may be determined by the user. Therefore, the time scale for the non-active hours is defined automatically so that the user can select only one time scale for the active hours. Moreover, in this approach, activities during the active hours can be displayed in more detail than those during the non-active hours.

The OK button 33 is clicked by the user to validate all values for the active hours setting part 31 and the time scale setting part 32 that the user changed.

The cancel button 34 is clicked by the user to invalidate all values changed by the user for the active hours setting part 31 and the time scale setting part 32 so that the previous values are still valid.

For convenience in explaining a schedule display window according to the present invention, it is assumed that a user sets 9 AM for the beginning time 31-1 and 6 PM (18:00 hours) for the ending time 31-2 of the active hours setting part 31, and sets 30 min., per division from the dropdown list 32-1 and 60 min. per division from the dropdown list 32-2 of the time scale setting part 32 at the schedule setting window 30 as shown in FIG.6.

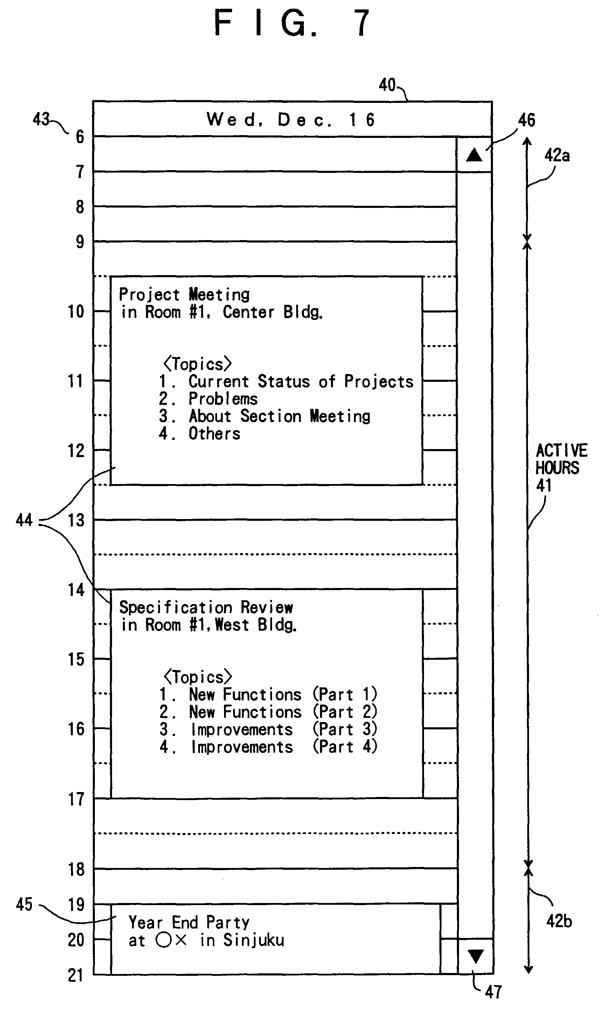

FIG.7 shows a schedule display window according to the embodiment of the present invention.

As shown in FIG.7, the schedule display 40 includes user active hours 41 indicated by a user, user non-active hours 42a and 42b that are hours other than the user active hours 41, a display start time 43 indicated by the user, activities 44 inputted by the user into the user active hours 41, an activity 45 inputted by the user into the non-active hours 42, a upward scroll button 46 to see the schedule of the preceding hours, and a downward scroll button 47 to see the schedule of the following hours.

The following is explained based on the assumptions as mentioned above.

When the user sets 30 min. per division for the time scale of the active hours in the schedule setting window 30, the schedule during the user active hours 41 is displayed at intervals of two lines. In addition, when the user sets 60 min. per division for the time scale of the non-active hours in the schedule setting window 30, the schedule during the user non-active hours 41 is displayed at intervals of one line. As a result, activities during the active hours can be displayed in more detail than those during the non-active hours.

The display start time 43 shows 6 AM, which time is a value of the display start time 5a-5 in the table 5a so that the user schedule starts from 6 AM. The user may change the display start time 43 when the user creates a new schedule or when the user opens the schedule.

The activities 44 are planned activities, for which the user inputs items, during the active hours. The interval for one hour is set wide enough for the user to read the items.

The activity 45 is a planned activity, for which the user inputs items, during the non-active hours. The interval for one hour is set narrower than that for the active hours.

To display the schedule or to input an activity before 6 AM, the display start time 43, the upward scroll button 46 is operated. When the user operates the upward scroll button 46, the current displayed schedule goes down and the preceding schedule before the display start time 43 is displayed.

To display the schedule or to input an activity after 9 PM (21:00 hours), the latest time displayed, the downward scroll button 47 is operated. When the user operates the downward scroll button 47, the current displayed schedule goes up and the following schedule after 9 PM (21:00 hours) is displayed.

Moreover, by the scale positioning part 4 in FIG.2, schedule time can be shown hourly in accordance with each time scale in the schedule display window 40.

As mentioned above, in the schedule display, it is possible that the active hours, which are frequently accessed to see and to input activities, are displayed at wider intervals than the non-active hours. Therefore, the present invention can provide a more user-friendly schedule display.

In this embodiment, two kinds of time scales for the active hours and the non-active hours are applied. Alternatively, several categories of hours may be applied to the schedule display and the time scale for each category may be indicated by a user. Moreover, every time the user inputs an activity, the time scale may be indicated for each activity by the user.

The present invention is not limited to the specifically disclosed embodiments, and variations and modifications may be made without departing from the scope of the invention.

The present application is based on Japanese Priority Application No. 11-029237 filed on February 5, 1999, the entire contents of which are hereby incorporated by reference.

**Claims**

1. A schedule display apparatus characterized by:

   a display interval defining part (3) defining a first display interval during a first time span (2) and a second display interval during a second time span (2), the first time span and the second time span being mutually exclusive; and
   a display control part (1, 4) generating whole display information including first display information in accordance with the first display interval during the first time span (2) and second display information in accordance with the second display interval during the second time span (2).

2. The schedule display apparatus as claimed in claim 1, characterized in that said display interval defining part (3) comprises a first display interval setting part which sets the first display interval.

3. The schedule display apparatus as claimed in claim 1, characterized in that said display interval defining part (3) comprises:

   a display interval list part displaying a display interval list of predetermined display intervals one of which is to be selected; and
   a display interval defining part defining at least one of the first display interval and the second display interval from the one of the predetermined display intervals selected from said display interval list.

4. The schedule display apparatus as claimed in claim 1, characterized in that said display interval defining (3) part comprises a second display interval defining part which defines the second display interval in accordance with the first display interval during the first time span (2).

5. The schedule display apparatus as claimed in claim 1, characterized in that said display interval defining part (3) comprises a second display interval defining part which defines the second display interval in accordance with the first display interval during the first time span (2) such that the second display interval is smaller than the first display interval.

6. The schedule display apparatus as claimed in claim 1, characterized in that a time (32) is used to define the first display interval or the second display interval.

7. The schedule display apparatus as claimed in claim 6, characterized in that said display control part (1, 4) comprises a time displaying part (4) which displays times in accordance with the first display interval during the first time span, and for displaying times in accordance with the second display interval during the second time span.

8. The schedule display apparatus as claimed in claim 1, further characterized by a time span setting part (2, 31) which sets at least one of the first time span and the second time span.

9. The schedule display apparatus as claimed in claim 8, characterized in that said time span setting part (2, 31) comprises a beginning time setting part which sets a beginning time of at least one of the first time span and the second time span.

10. The schedule display apparatus as claimed in claim 8, characterized in that said time span setting part (2, 31) comprises an ending time setting part which sets an ending time of at least one of the first time span and the second time span.

**11.** The schedule display apparatus as claimed in claim 8, characterized in that said time span setting part (2, 31) comprises:

a list displaying part displaying a list of a plurality of predetermined times; and
a time span defining part defining at least one of the first time span and the second time span based on a time selected from the list.

**12.** The schedule display apparatus as claimed in claim 1, further characterized by a time scale positioning part (4) which positions times at every determined time in accordance with the first display interval during the first time span and in accordance with the second display interval during the second time span.

**13.** A method for displaying a schedule characterized by the steps of:

(a) defining a first display interval during a first time span and a second display interval during a second time span, the first time span and the second time span being mutually exclusive; and
(b) generating whole display information including first display information in accordance with the first display interval during the first time span and second display information in accordance with the second display interval during the second time span.

**14.** The method as claimed in claim 13, characterized in that said step (a) comprises the steps of setting the first display interval.

**15.** The method as claimed in claim 13, characterized in that said step (a) comprises the steps of:

displaying a display interval list of predetermined display intervals one of which is to be selected; and
defining at least one of the first display interval and the second display interval from the one of the predetermined display intervals selected from said display interval list.

**16.** The method as claimed in claim 13, characterized in that said step (a) comprises the steps of defining the second display interval in accordance with the first display interval during the first time span.

**17.** The method as claimed in claim 13, characterized in that said step (a) comprises the steps of defining the second display interval in accordance with the first display interval during the first time span such that the second display interval is smaller than the first display interval.

**18.** The method as claimed in claim 13, characterized in that said step (b) comprises the steps of using a time to define the first display interval or the second display interval.

**19.** The method as claimed in claim 13, characterized in that said step (b) comprises the steps of displaying times in accordance with the first display interval during the first time span (61), and for displaying times in accordance with the second display interval during the second time span (62).

**20.** The method as claimed in claim 13, further characterized by the steps of (c) setting at least one of the first time span (61) and the second time span (62).

**21.** The method as claimed in claim 20, characterized in that said step (c) comprises the steps of setting a beginning time of at least one of the first time span (61) and the second time span (62).

**22.** The method as claimed in claim 20, characterized in that said step (c) comprises the steps of setting an ending time at least one of the first time span (61) and the second time span (62).

**23.** The method as claimed in claim 20, characterized in that said step (c) comprises the steps of:

displaying a list of a plurality of predetermined times; and
defining at least one of the first time span (61) and the second time span (62) based on a time selected from the list.

**24.** The method as claimed in claim 13, characterized in that the step (b) comprises the steps of positioning times at every determined time in accordance with the first display interval during the first time span (61) and in accordance with the second display interval during the second time span (62).

**25.** A computer-readable recording medium recorded with a program for causing a computer to display a schedule, said program characterized by the codes of:

(a) defining a first display interval (5a-3) during a first time span (61) and a second display interval (5a-4) during a second time span (62), the first time span (61) and the second time span (62) being mutually exclusive; and
(b) generating whole display information including first display information in accordance with the first display interval during the first time span and second display information in accordance with the second display interval during the second time span.

26. The computer-readable recording medium as claimed in claim 25, characterized in that said code (a) comprises the codes of setting the first display interval (5a-3).

27. The computer-readable recording medium as claimed in claim 25, characterized in that said code (a) comprises the codes of:

> displaying a display interval list of predetermined display intervals one of which is to be selected; and
> defining at least one of the first display interval (5a-3) and the second display interval (5a-4) from the one of the predetermined display intervals selected from said display interval list.

28. The computer-readable recording medium as claimed in claim 25, characterized in that said code (a) comprises the codes of defining the second display interval (5a-4) in accordance with the first display interval (5a-3) during the first time span.

29. The computer-readable recording medium as claimed in claim 25, characterized in that said code (a) comprises the codes of defining the second display interval (5a-4) in accordance with the first display interval (5a-3) during the first time span (61) such that the second display interval (5a-4) is smaller than the first display interval (5a-3).

30. The computer-readable recording medium as claimed in claim 30, characterized in that said code (b) comprises the codes of using a time to define the first display interval (5a-3) or the second display interval (5a-4).

31. The computer-readable recording medium as claimed in claim 25, characterized in that said code (b) comprises the codes of displaying times in accordance with the first display interval (5a-3) during the first time span (61), and for displaying times in accordance with the second display interval (5a-4) during the second time span (62).

32. The computer-readable recording medium as claimed in claim 25, further characterized by the code (c) of setting at least one of the first time span (61) and the second time span (62).

33. The computer-readable recording medium as claimed in claim 32, characterized in that said code (c) comprises the codes of setting a beginning time of at least one of the first time span (61) and the second time span (62).

34. The computer-readable recording medium as claimed in claim 32, characterized in that said code (c) comprises the codes of setting an ending time at least one of the first time span (61) and the second time span (62).

35. The computer-readable recording medium as claimed in claim 32, characterized in that said code (c) comprises the codes of:

> displaying a list of a plurality of predetermined times; and
> defining at least one of the first time span (61) and the second time span (62) based on a time selected from the list.

36. The computer-readable recording medium as claimed in claim 25, characterized in that the code (b) comprises the codes of positioning times at every determined time in accordance with the first display interval (5a-3) during the first time span (61) and in accordance with the second display interval (5a-4) during the second time span (62).

# F I G. 1 PRIOR ART

# FIG. 2

SCHEDULE MANAGEMENT DEVICE — 100

SCHEDULE MANAGER (1)

ACTIVE HOURS MANAGER (2)

TIME SCALE MANAGER (3)

SCALE POSITIONING PART (4)

INPUT PART (6)

DISPLAY PART (7)

RECORDING MEDIUM (5)

TABLE (5a)

ACTIVITY DETAIL RECORDING AREA (5b)

# FIG.3

CPU 11

MAIN MEMORY 12

STORAGE DEVICE 13

INPUT UNIT 14

DISPLAY UNIT 15

CD-ROM 16

# FIG.4

5a

| | |
|---|---|
| BEGINNING TIME | 5 a − 1 |
| ENDING TIME | 5 a − 2 |
| TIME SCALE FOR THE ACTIVE HOURS | 5 a − 3 |
| THE SCALE FOR THE NON-ACTIVE HOURS | 5 a − 4 |
| DISPLAY START TIME | 5 a − 5 |

# F I G. 5

START

OBTAIN THE TIME SCALE
FOR THE ACTIVE HOURS — S21

OBTAIN THE TIME SCALE
FOR THE NON-ACTIVE HOURS — S22

OBTAIN THE ACTIVE HOURS — S23

S24
$t = 0$ ; $t \leq 24$ ; $t + +$
?
NO

YES

END

SAVE A POSITION
OF TIME t — S25

S26
CHECK IF
TIME t BELONGS TO THE
ACTIVE HOURS
?
NO

YES  S27

CALCULATE A POSITION
OF TIME t=t+1 IN THE
ACTIVE HOURS

S28

CALCULATE A POSITION
OF TIME t=t+1 IN THE
NON-ACTIVE HOURS

F I G. 6

# F I G. 7

Wed, Dec. 16

Project Meeting
in Room #1, Center Bldg.


〈Topics〉
1. Current Status of Projects
2. Problems
3. About Section Meeting
4. Others

Specification Review
in Room #1, West Bldg.


〈Topics〉
1. New Functions (Part 1)
2. New Functions (Part 2)
3. Improvements (Part 3)
4. Improvements (Part 4)

Year End Party
at ○× in Sinjuku

ACTIVE
HOURS
41